# EUROPEAN PATENT SPECIFICATION

(11) **EP 1 718 499 B1**
(45) Date of publication and mention of the grant of the patent: **20.08.2008**
(21) Application number: 05711128.8
(22) Date of filing: 24.02.2005
(51) Int. Cl.: B60R 16/02, B60K 35/00, G01P 1/08

(54) **INDICATING ECOLOGICAL AND ECONOMICAL DRIVING OF A VEHICLE**
ANZEIGE FÜR ÖKOLOGISCHES UND WIRTSCHAFTLICHES FAHREN EINES FAHRZEUGS
INDICATION DE LA CONDUITE ECOLOGIQUE ET ECONOMIQUE D'UN VEHICULE

(30) Priority: 26.02.2004 SE 0400482
(43) Date of publication of application: 08.11.2006
(73) Proprietor: Scania CV AB (publ), 151 87 Södertälje (SE)
(72) Inventor: ANDERSSON, Jon, S-151 46 Södertälje (SE); CARLSSON, Ulf, S-151 38 Södertälje (SE)
(74) Representative: Röthinger, Rainer
(86) International application number: PCT/SE2005/000268
(87) International publication number: WO 2005/082674

(56) References cited:
- WO-A1-02/092394
- DE-A1- 3 912 359
- DE-A1- 10 014 818
- SE-B- 411 325
- US-A- 4 523 457

## Description

### TECHNICAL FIELD

The invention relates generally to vehicles and more specifically to a method and a computer program of indicating ecological and economical driving to a driver of a vehicle.

### BACKGROUND OF THE INVENTION

The emission of different more or less unhealthy gases from an engine in a vehicle is mainly dependent on engine speed and delivered engine power.

For ecological reasons, it is of importance that vehicles are driven such that the emission of such gases is kept as low as possible.

Delivered engine power can be calculated with knowledge of e.g. engine torque, and engine torque in its turn can be determined by measuring actual torque in the drive line of the vehicle or with knowledge of the fuel consumption of the engine.

Engine torque is proportional to the amount of injected diesel in a diesel engine and to the position of the throttle valve in a spark ignition engine.

Thus, there is a connection between low emission and low fuel consumption which means that an ecological way of driving also is an economical way of driving.

Through the document DE 100 14 818 A1 is previously known a device for determining and displaying optimum motor speed or r.p.m. range to a driver of a vehicle. This range is variable and primarily based on calculated optimal, i.e. minimal, fuel consumption at a given power demand, for example as derived from a given gas pedal position. The optimum motor speed range is illuminated on the motor speed indicator through activation of a series of light emitting elements only when the sensed current motor speed is outside the optimum range. The driver is thus continuously alerted when a driving strategy is chosen, which is not optimal regarding fuel consumption. One embodiment entails displaying the optimum range when the current motor speed has been outside the optimum range for a certain time period, for example 1 to 3 seconds.

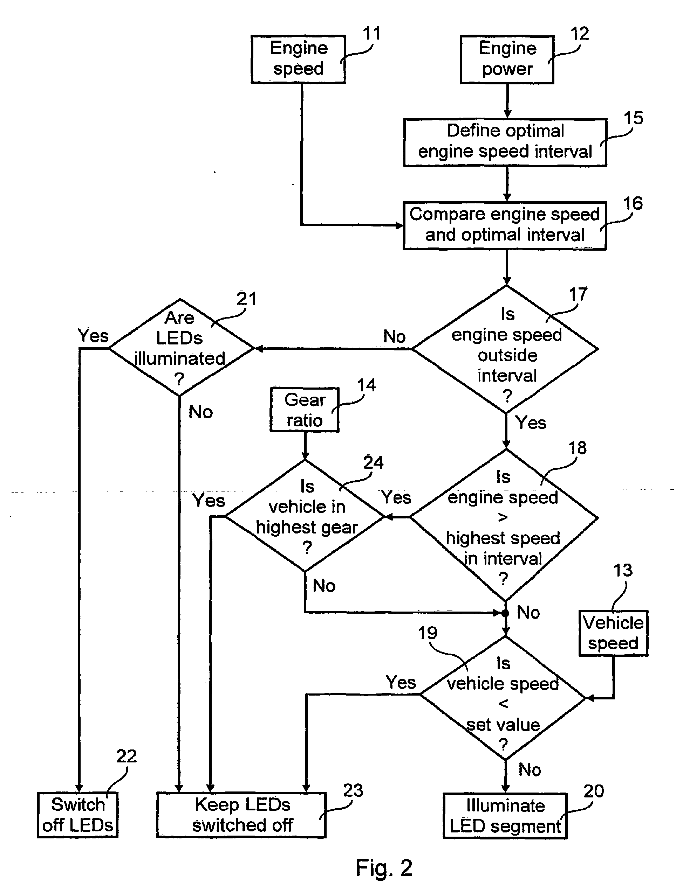

DE 10014818 (D1) is considered to represent the closest prior art. D1 describes a method for indicating optimal engine speed regarding fuel consumption, which is considered to correspond to ecological and economical driving, to a driver of a vehicle and solves the problem of alerting a driver to optimized driving regarding said fuel consumption (see paragraph [0010], [0018]-[0021], abstract and fig. 2-4).

D1 states that in certain traffic situations, such as city traffic, the driver is not burdened with unnecessary indications by limiting the indications to quasi-stationary conditions of the engine operation (see paragraph [0008] and [0009]). The segment described in D1 may distract the driver in certain situations, such as when the vehicle is driven with low quasi-stationary speed in city traffic with an engine speed outside the optimal interval, reversing the vehicle with quasi-stationary speed with an engine speed outside the optimal interval or when driving slowly with quasi-stationary speed on broken ground, e.g. on construction sites, where the driver may choose a lower gear than the optimal in order to increase the engine speed margin to the engine stall speed. Also, the method of D1 does not illuminate the segment when the driver keeps the engine speed "non-quasi stationary" outside the optimal engine speed interval, e.g. during a typical sporty drive style with large vehicle speed and engine speed variations.

Solutions like this, which derives demanded engine power from the gas pedal position for calculating an optimum motor speed range, also disclosed in US4523457, has a drawback as depending on the pedal position thus not being suitable for use with a cruise control function, for example being present in most trucks of today.

Also, solutions for alerting a driver to optimized driving regarding fuel consumption should take care not to risk compromising traffic safety. A driver's attention could for example be unduly drawn away from certain traffic situations involving an increased risk for accidents, such as driving in city traffic where the vehicle speed is low, queuing or traffic jam situations and the like low speed driving situations if the driver, for example is focused on constantly keeping the motor speed within an optimum range instead of focusing on vehicle surroundings and avoiding incidents. Since, for example, a trucker of today is highly cost conscious the risk exists of him/her trying to keep fuel consumption at a minimum also during such traffic conditions as described, when given the means for it.

It is, however, difficult for a driver to adjust his driving such that it is optimal from ecological and economical point of view all the time in dependence of the vehicle velocity.

### SUMMARY OF THE INVENTION

The object of the invention is to enable a driver of a vehicle to adjust his driving such that it is optimal both from ecological and economical point of view depending on the vehicle speed, thus, in such a manner that the emission values are low at the same time as the fuel consumption is low for a certain vehicle speed range.

This is attained by a method according to the invention of indicating ecological and economical driving to a driver in a vehicle by monitoring engine speed and engine power, indicating the engine speed on an indicator, defining an optimal engine speed interval from ecological and economical point of view in response to an actual engine power value, comparing the actual engine speed value and the optimal engine speed interval, illuminating a segment of at least one of a number of light emitting elements on the indicator in correspondence to the optimal engine speed interval in case the actual engine speed value is outside the optimal engine speed interval to alert the driver to adjust the engine speed to within the optimal engine speed interval, switching off the illumination of the segment in response to that the actual engine speed value is inside the optimal engine speed interval, and monitoring vehicle speed, and keeping the light emitting elements switched off in response to that the vehicle speed is lower than a predetermined value. Hereby, the driver will receive a clear confirmation of whether or not he is driving at an optimal engine speed during a certain vehicle speed range, i.e. normal driving mode and, no segment will be illuminated at non-optimal driving at low vehicle speeds or standstill, i.e. abnormal driving mode.

In one embodiment of the invention, the optimal engine speed interval is defined from a predetermined table. This will save computer time and capacity.

If computer time and capacity is of no problem, the optimal engine speed interval can instead be defined in real time by calculating the interval from an actual engine power value.

According to one embodiment of the invention, the segment is illuminated in case the actual engine speed value is outside the optimal engine speed interval for a first predetermined period of time. Hereby, the driver will be allowed to be outside the optimal interval for a short period of time without any segment being illuminated.

In one embodiment, the illumination of the segment is switched off in response to that the actual engine speed value is inside the optimal engine speed interval for a second predetermined period of time. Hereby, the driver will be prompted to maintain the engine speed within the optimal interval.

Furthermore, gear ratio may be monitored and the light emitting elements on the engine speed indicator are kept switched off in response to that the engine speed is higher than the highest speed in the optimal interval and the vehicle is in highest gear.Hereby, no segment will be illuminated when it is not possible for the driver to make an up-shift to lower the engine speed since he is already driving in highest gear.

### BRIEF DESCRIPTION OF THE DRAWING

The invention will be described below with reference to the appended drawing on which
Fig. 1 is a schematic illustration of an embodiment of an apparatus for controlling an engine speed indicator in accordance with the method according to the invention, and
Fig. 2 is a flow chart illustrating the steps of an embodiment of the method according to the invention of indicating ecological and economical driving to a driver in a vehicle.

### DESCRIPTION OF THE INVENTION

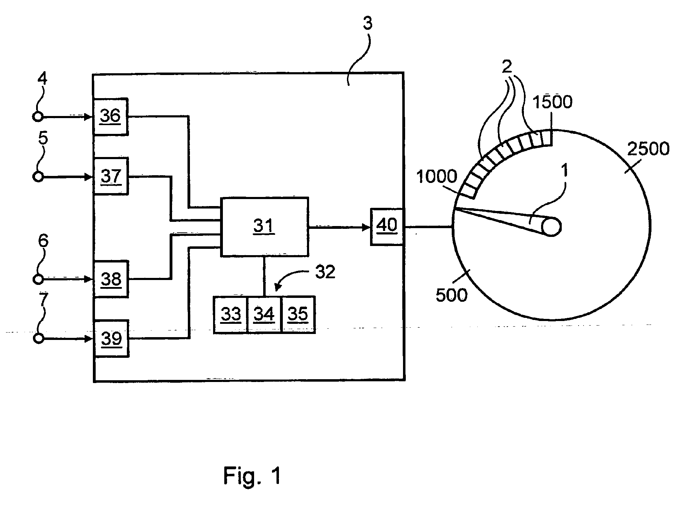

Fig. 1 is a schematic illustration of an embodiment of a control apparatus for controlling an engine speed indicator in a vehicle in accordance with the method according to the invention.

The method according to the invention is applicable to any vehicle with internal combustion engine.

The engine speed indicator in Fig. 1 is an rpm indicator of the type disclosed e.g. in WO 02/092394 and is provided with a pointer 1 that indicates actual engine speed, and a number of light emitting elements, e.g. light emitting diodes (LEDs) 2, lying next to each other along the periphery of the indicator.

In the embodiment in Fig. 1, there are ten LEDs 2 located between 1000 and 1500 rpm, i.e. just along part of the periphery, such that each LED 2 corresponds to an rpm interval of 50 rpm.

This particular rpm interval is the interval within which e.g. trucks with diesel engines are operated for up to 95 % of the time, i.e. a major part of the time.

The number of LEDs 2 as well as the rpm interval between which the LEDs 2 are located is chosen with respect to the type of engine, i.e. diesel or petrol, and the desired resolution of the indicator.

The control apparatus in Fig. 1 comprises a computer 3 with a central processing unit (CPU) 31 that is connected to a computer program product 32 in the form of a storage unit that stores a computer program 33, a table 34, and a memory 35 in which limit values to be described below are set.

The CPU 31 is connected to four input ports, namely an input port 36 for monitoring actual engine speed, i.e. rpm, appearing on an input terminal 4, an input port 37 for monitoring actual delivered engine power appearing on an input terminal 5, an input port 38 for monitoring actual vehicle speed, i.e. km/h, appearing on an input terminal 6, and an input port 39 for monitoring actual gear ratio appearing on an input terminal 7.

The CPU 31 is connected to an output port 40 for communication with the engine speed indicator to control the LEDs 2 as will be described below.

Fig. 2 is a flow chart illustrating the steps of an embodiment of the method according to the invention of indicating ecological and economical driving by means of the LEDs 2 on the engine speed indicator in Fig. 1 in a vehicle.

In accordance with the invention, the CPU 31 monitors actual engine speed on input terminal 4 in Step 11, actual delivered engine power on input terminal 5 in Step 12, actual vehicle speed on input terminal 6 in Step 13, and actual gear ratio on input terminal 7 in Step 14.

In Step 15, in response to an actual engine power value on input terminal 5, an engine speed interval that is optimal from ecological and economical point of view is defined in the CPU 31 by means of the table 34 stored in the storage unit 32 in the computer 3.

The table 34 has been set up to define for a number of engine power values, predetermined engine speed limit values, i.e. upper and lower limit values, that if adhered to by the driver, would enable him to drive as ecological and economical as possible.

It is to be understood that instead of having a pre-calculated table, an optimal engine speed interval can equally well be calculated in real time from an actual value of delivered engine power provided that enough computer capacity is available.

In Step 16 the actual engine speed monitored in Step 11 is compared with the optimal engine speed interval defined in Step 15.

In Step 17, it is queried whether the actual engine speed is outside the optimal engine speed interval defined in Step 15.

If the answer is YES to the query in Step 17, i.e. the actual engine speed is outside the optimal engine speed interval defined in Step 15, after a predetermined short period of time, e.g. 5 -10 s set in memory 35, it is queried in Step 18 whether the engine speed is > the highest speed in the optimal interval.

A time interval of 5 -10 s will allow the driver to be outside the optimal interval for a short period of time in connection with e.g. a gear shift.

If the answer to the query in Step 18 is NO, i.e. the engine speed is not higher than the highest speed in the optimal interval, it is queried in Step 19 whether the vehicle speed as monitored in Step 13 is < than a predetermined vehicle speed, e.g. a value between 15 - 25 km/h, set in memory 35.

Abnormal driving mode is in this context defined as a vehicle speed less than a predetermined value, for example a value between 15 - 25 km/h, which in connection with e.g. slow driving, and even standstill, will allow the driver to be outside the optimal interval. Normal driving mode is thus here defined as all other vehicle speeds obtainable with the type of vehicle concerned, for example truck with diesel or petrol engine.

If the answer to the query in Step 19 is NO, i.e. the vehicle speed is > than the set predetermined vehicle speed, the CPU 31 illuminates a segment, i.e. at least one of the ten LEDs 2 on the engine speed indicator in correspondence to the optimal engine speed interval defined in Step 15 as indicated in Step 20 to alert the driver about the fact that he should adjust the engine speed to be within the optimal engine speed interval illuminated by the LEDs 2 on the engine speed indicator to reduce the emission of unhealthy gases and save fuel since he is not driving ecologically and economically for the time being.

Any adjustment of the engine speed by the driver will be noticed by the CPU 31 monitoring input terminal 4 in a successive Step 11. Should the driver adjust the engine speed to be within the optimal engine speed interval illuminated by the LEDs 2 on the engine speed indicator, the answer to a successive query in Step 17 will be NO.

In Step 21 it will then be queried whether LEDs 2 are illuminated.

If the answer to the query in Step 21 is YES, i.e. at least one of the ten LEDs 2 is illuminated, the LED or LEDs 2 in question are switched off in Step 22 after a predetermined period of time, e.g. 5 - 10 s set in memory 35, as a confirmation of that the driver is now driving ecologically and economically.

A time interval of 5*-*10 s will be enough for the driver to understand that he should stay with the pointer 1 within the illuminated segment of the LEDs 2.

As an example, if the driver is driving at e.g. an engine speed of 1400 rpm as indicated by the pointer 1 and monitored by the CPU 31 via input port 36 and that engine speed is outside the optimal engine speed interval of e.g. 1100 - 1200 rpm as defined in Step 15 at the engine power that is delivered for the moment as monitored by the CPU 31 via input port 37, a segment of the two LEDs 2 corresponding to that interval will be illuminated to alert the driver to lower the engine speed. If he reduces the engine speed such that the pointer 1 is inside the illuminated LED segment on the indicator, i.e. somewhere between 1100 and 1200 rpm, for the predetermined period of time, i.e. 5 - 10 s, the illuminated LED segment in question will be switched off as an indication of that the driver is now driving ecologically and economically.

If the answer to the query in Step 21 is NO, i.e. no segment of the LEDs 2 is illuminated, the LEDs 2 are kept switched off as indicated in Step 23 due to the fact that the driver is already driving ecologically and economically.

It is to be understood that Step 21 is not absolutely necessary but that Steps 22 and 23 can be combined.

If the answer is YES to the query in Step 18, i.e. the engine speed is higher than the highest speed in the optimal interval, it is queried in Step 24 whether the vehicle is in highest gear as monitored by the CPU 31 via input port 39 on input terminal 7 in Step 14.

If the answer is YES to the query in Step 24, i.e. the vehicle is in highest gear, the CPU 31 keeps the LEDs 2 of the engine speed indicator switched off in Step 23.

The reason for keeping the LEDs 2 switched off is that the vehicle cannot be switched up into a higher gear to lower the engine speed since it is already in highest gear. Thus, the engine power and the fuel consumption can normally not be lower than they already are.

If the answer is NO to the query in Step 24, i.e. the vehicle is not in highest gear, it is queried in Step 19 whether the vehicle speed as monitored in Step 13 is < than the predetermined vehicle speed, i.e. the speed in the interval of 15 - 25 km/h, set in memory 35.

If the answer to the query in Step 19 is YES, i.e. the vehicle speed is < than the set predetermined vehicle speed corresponding to standstill or a very low vehicle speed, the CPU 31 keeps the LEDs 2 of the engine speed indicator switched off as indicated in Step 23.

As should be apparent from the above, by illuminating an optimal segment on the engine speed indicator to draw the driver's attention to the fact that he is not driving ecological and economical for the time being but should adjust his engine speed to be within the illuminated segment, switching off the illumination when the engine speed is within the illuminated segment and keeping it switched off when driving at low speed, in the end the driver will attempt to drive so ecological and economical that no segment will be illuminated during so called normal driving mode only, the driver not being displayed an optimal segment during so called abnormal or low speed driving mode when driving non-optimal in an ecological and economical point of view. Thus, an alerting function for ecological and economical driving is provided, which limits the risk of drawing the driver's attention away from the vehicle surroundings and fellow road-users at traffic situations involving enhanced risk for incidents and accidents.

## Claims

1. A method of indicating ecological and economical driving to a driver of a vehicle, comprising the steps of monitoring engine speed and engine power, and indicating the engine speed on an indicator, **characterized by** the steps of
- defining an optimal engine speed interval from ecological and economical point of view in response to an actual engine power value,
- comparing the actual engine speed value and the optimal engine speed interval,
- illuminating a segment of at least one of a number of light emitting elements on the indicator in correspondence to the optimal engine speed interval in case the actual engine speed value is outside the optimal engine speed interval to alert the driver to adjust the engine speed to within the optimal engine speed interval,
- switching off the illumination of the segment in response to that the actual engine speed value is inside the optimal engine speed interval, and
- monitoring vehicle speed, and keeping the light emitting elements switched off in response to that the vehicle speed is lower than a predetermined value.

2. The method according to claim 1, **characterized by** the step of defining the optimal engine speed interval from a predetermined table.

3. The method according to claim 1, **characterized by** the step of defining the optimal engine speed interval in real time by calculating the interval from an actual engine power value.

4. The method according to claim 1, **characterized by** the step of illuminating the segment in case the actual engine speed value is outside the optimal engine speed interval for a first predetermined period of time.

5. The method according to claim 1, **characterized by** the step of switching off the illumination of the segment in response to that the actual engine speed value is inside the optimal engine speed interval for a second predetermined period of time.

6. The method according to claim 1, **characterized by** the step of monitoring gear ratio, and keeping the light emitting elements switched off in response to that the engine speed is higher than the highest speed in the optimal interval and the vehicle is in highest gear.

7. The method according to claim 1, **characterized by** keeping the light emitting elements switched off in response to that the vehicle speed is lower than a value between 15 to 25 km/h.

8. A computer program (33) comprising code means that when executed on a computer causes the computer to carry out all steps of one of claim 1 to claim 7.

9. A computer program product (32) comprising a computer program according to claim 8 and a computer readable medium on which the computer program is stored.

## Patentansprüche

1. Verfahren zum Anzeigen einer ökologischen und wirtschaftlichen Fahrweise gegenüber einem Fahrer eines Fahrzeugs, umfassend die Schritte: Überwachen einer Motordrehzahl und einer Motorleistung und Anzeigen der Motordrehzahl auf einer Anzeigeeinrichtung,
**gekennzeichnet durch** die Schritte
- Definieren eines optimalen Motordrehzahlintervalls aus ökologischen und wirtschaftlichen Gesichtspunkten in Antwort auf einen tatsächlichen Motorleistungswert;
- Vergleichen des tatsächlichen Motordrehzahlwerts mit dem optimalen Motordrehzahlintervall;
- Beleuchten eines Segments wenigstens eines aus einer Vielzahl von lichtemittierenden Elementen auf der Anzeigeeinrichtung entsprechend dem optimalen Motordrehzahlintervall in dem Fall, dass der tatsächliche Motordrehzahlwert außerhalb des optimalen Motordrehzahlintervalls liegt, um den Fahrer zu alarmieren, die Motordrehzahl so einzustellen, dass sie innerhalb des optimalen Motordrehzahlintervalls liegt;
- Ausschalten der Beleuchtung des Segments in Antwort darauf, dass der tatsächliche Motordrehzahlwert innerhalb des optimalen Motordrehzahlintervalls liegt; und
- Überwachen einer Fahrzeuggeschwindigkeit und Beibehalten des ausgeschalteten Zustands der lichtemittierenden Elemente in Antwort darauf, dass die Fahrzeuggeschwindigkeit niedriger als ein vorbestimmter Wert ist.

2. Verfahren nach Anspruch 1,
**gekennzeichnet durch** den Schritt Definieren des optimalen Motordrehzahlintervalls aus einer vorbestimmten Tabelle.

3. Verfahren nach Anspruch 1,
**gekennzeichnet durch** den Schritt Definieren des optimalen Motordrehzahlintervalls in Echtzeit **durch** Berechnen des Intervalls aus einem tatsächlichen Motorleistungswert.

4. Verfahren nach Anspruch 1,
**gekennzeichnet durch** den Schritt Beleuchten des Segments in dem Fall, dass der tatsächliche Motordrehzahlwert während einer ersten vorbestimmten Zeitspanne außerhalb des optimalen Motordrehzahlintervalls liegt.

5. Verfahren nach Anspruch 1,
**gekennzeichnet durch** den Schritt Ausschalten der Beleuchtung des Segments in Antwort darauf, dass der tatsächliche Motordrehzahlwert während einer zweiten vorbestimmten Zeitspanne innerhalb des optimalen Motordrehzahlintervalls liegt.

6. Verfahren nach Anspruch 1,
**gekennzeichnet durch** den Schritt Überwachen eines Übersetzungsverhältnisses und Beibehalten des ausgeschalteten Zustands der lichtemittierenden Elemente in Antwort darauf, dass die Motordrehzahl höher als die höchste Drehzahl in dem optimalen Intervall ist und dass sich das Fahrzeug im höchsten Gang befindet.

7. Verfahren nach Anspruch 1,
**gekennzeichnet durch** Beibehalten des ausgeschalteten Zustands der lichtemittierenden Elemente in Antwort darauf, dass die Fahrzeuggeschwindigkeit niedriger als ein Wert zwischen 15 bis 25 km/h ist.

8. Computerprogramm (33), umfassend Codemittel, die dann, wenn sie auf einem Computer ausgeführt werden, den Computer dazu veranlassen, alle Schritte eines der Ansprüche 1 bis 7 ausführen.

9. Computerprogrammprodukt (32), umfassend ein Computerprogramm nach Anspruch 8 und ein computerlesbares Medium, auf welchem das Computerprogramm gespeichert ist.

## Revendications

1. Procédé d'indication de conduite écologique et économique à un conducteur d'un véhicule, comprenant les étapes de contrôle du signal de vitesse du moteur et du signal de puissance du moteur et l'indication de la vitesse du moteur sur un indicateur, **caractérisé par** les étapes de :
- définition d'un intervalle de vitesse de moteur optimum du point de vue écologique et économique en réponse à une valeur de puissance réelle du moteur,
- comparaison de la valeur de vitesse réelle du moteur et de l'intervalle de vitesse du moteur optimum,
- éclairage d'un segment d'au moins un de plusieurs éléments d'éclairage de lumière sur l'indicateur en correspondance à l'intervalle de vitesse de moteur optimum, dans le cas dans lequel la valeur de vitesse du moteur réelle est en-dehors de l'intervalle de vitesse de moteur optimum pour alerter le conducteur pour ajuster la vitesse du moteur dans l'intervalle de vitesse de moteur optimum,
- décommutation de l'éclairage du segment en réponse au fait que la valeur de vitesse du moteur réelle se trouve à l'intérieur de l'intervalle de vitesse du moteur optimum, et
- contrôle du signal de vitesse du véhicule et maintien des éléments d'émission de lumière décommutés en réponse au fait que la vitesse du véhicule est inférieure à une vitesse prédéterminée.

2. Procédé selon la revendication 1, **caractérisé par** l'étape de définition de l'intervalle de vitesse optimum du moteur à partir d'une table prédéterminée.

3. Procédé selon la revendication 1, **caractérisé par** l'étape de définition de l'intervalle de vitesse de moteur optimum en temps réel en calculant l'intervalle à partir d'une valeur de puissance de moteur réelle.

4. Procédé selon la revendication 1, **caractérisé par** l'étape d'éclairage du segment dans le cas dans lequel la valeur de la vitesse du moteur réelle se trouve à l'extérieur de l'intervalle de la vitesse de moteur optimum à partir d'une première période de temps prédéterminée.

5. Procédé selon la revendication 1, **caractérisé par** l'étape de décommutation de l'éclairage du segment en réponse au fait que la valeur de vitesse réelle du moteur se trouve à l'intérieur de l'intervalle de vitesse optimum de moteur pendant une deuxième période de temps prédéterminée.

6. Procédé selon la revendication 1, **caractérisé par** l'étape de contrôle du rapport de vitesse et le maintien des éléments d'émission de lumière décommutés en réponse au fait que la vitesse du moteur est supérieure à la vitesse la plus élevée dans l'intervalle optimum et que le véhicule est dans le rapport de vitesse le plus élevé.

7. Procédé selon la revendication 1, **caractérisé par** le maintien des éléments émettant de la lumière décommutés en réponse au fait que la vitesse du véhicule est inférieure à une valeur entre 15 et 25 km/h.

8. Programme d'ordinateur (33) comprenant des moyens de code qui, lorsqu'ils sont exécutés sur un ordinateur provoquent que l'ordinateur mette en oeuvre toutes les étapes de l'une des revendications 1 à 7.

9. Produit de programme d'ordinateur (32) comprenant un programme d'ordinateur selon la revendication 8, et un milieu lisible d'ordinateur sur lequel le programme d'ordinateur est enregistré.
